# EUROPEAN PATENT APPLICATION

(11) **EP 4 780 014 A1**
(43) Date of publication of application: **22.07.2026**
(21) Application number: 24869872.2
(22) Date of filing: 19.06.2024
(51) Int. Cl.: H04Q 11/00

(54) **ROUTING CONFIGURATION METHOD AND APPARATUS, AND DEVICE, STORAGE MEDIUM AND COMPUTER PROGRAM**

(30) Priority: 28.09.2023 CN 202311287924; 07.12.2023 CN 202311680905
(71) Applicant: Huawei Cloud Computing Technologies Co., Ltd., Gui'an New District, Guizhou 550025 (CN)
(72) Inventor: GAO, Zheng, Guiyang, Guizhou 550025 (CN); SUN, Baoming, Guiyang, Guizhou 550025 (CN); YANG, Xiaofeng, Guiyang, Guizhou 550025 (CN)
(74) Representative: Maiwald GmbH
(86) International application number: PCT/CN2024/100229
(87) International publication number: WO 2025/066311

(57) **Abstract**

This application belongs to the field of network technologies, and discloses a route configuration method and apparatus, a device, a storage medium, and a computer program. The method includes: providing a route configuration interface, where the route configuration interface is used to obtain route configuration information of a target microservice, the route configuration information includes a deployment address of the target microservice, and there is at least one routing node on an access path of the target microservice; determining target routing information of the at least one routing node based on the route configuration information; sending a route configuration instruction to the at least one routing node based on the target routing information of the at least one routing node and a route configuration policy; obtaining real-time routing information of the at least one routing node; and determining, if the real-time routing information of the at least one routing node is the same as the respective target routing information of the at least one routing node, that route configuration of the target microservice is completed. In this application, routing nodes are controlled to sequentially perform a route configuration operation, thereby improving route configuration efficiency.

## Description

This application claims priorities to Chinese Patent Application No. 202311287924.X, filed on September 28, 2023 and entitled "GATEWAY CONFIGURATION METHOD, APPARATUS, AND SYSTEM", and to Chinese Patent Application No. 202311680905.3, filed on December 7, 2023 and entitled "ROUTE CONFIGURATION METHOD AND APPARATUS, DEVICE, STORAGE MEDIUM, AND COMPUTER PROGRAM", both of which are incorporated herein by reference in their entireties.

### TECHNICAL FIELD

This application relates to the field of network technologies, and in particular, to a route configuration method and apparatus, a device, a storage medium, and a computer program.

### BACKGROUND

In a K8s container-based microservice architecture, service traffic scheduling and load balancing are generally implemented through collaboration of both internal and external routing nodes. The external routing node is responsible for forwarding user traffic to a corresponding K8s cluster, and the internal routing node is responsible for forwarding user traffic that flows into a K8s cluster to a corresponding microservice.

In a related technology, when a service access route of a microservice is configured, node routing information of a plurality of internal and external routing nodes on the service access path needs to be adjusted. Specifically, an administrator first determines, based on a K8s cluster to which the microservice belongs, an internal routing node corresponding to the K8s cluster, and determines, based on a network region (Region) to which the K8s cluster belongs, an external routing node corresponding to the region. Then, node routing information of the internal routing node is adjusted by using a route controller of the internal routing node; and node routing information of the external routing node is adjusted by using a route controller of the external routing node.

However, in the foregoing manner, when route configuration is asynchronously performed on a plurality of routing nodes, configuration efficiency of the service access route is low; and when a race condition exists in the route configuration of the plurality of routing nodes taking effect, the microservice may be unavailable.

### SUMMARY

This application provides a route configuration method and apparatus, a device, a storage medium, and a computer program, to improve configuration efficiency of configuring routes of a plurality of routing nodes. The technical solutions are as follows.

According to a first aspect, a route configuration method is provided. The method includes:
providing a route configuration interface, where the route configuration interface is used to obtain route configuration information of a target microservice, the route configuration information includes a deployment address of the target microservice, and there is at least one routing node on an access path of the target microservice; determining target routing information of the at least one routing node based on the route configuration information, where the target routing information is routing information of the at least one routing node when the target microservice is accessible via the at least one routing node; sending a route configuration instruction to the at least one routing node based on the target routing information of the at least one routing node and a route configuration policy, where the route configuration policy indicates a route configuration sequence of the at least one routing node; obtaining real-time routing information of the at least one routing node, where the real-time routing information is current routing information of the at least one routing node; and determining, if the real-time routing information of the at least one routing node is the same as the respective target routing information of the at least one routing node, that route configuration of the target microservice is completed.

It can be learned that in this application, after the route configuration information of the target microservice is obtained on the route configuration interface, the at least one routing node on the access path of the target microservice and the target routing information of the at least one routing node may be determined based on the route configuration information. Then, the route configuration instruction is sent to the at least one routing node based on the target routing information of the at least one routing node and the route configuration policy, to control the at least one routing node to sequentially perform a route configuration operation based on the configuration sequence. In this way, a race condition in route configuration of the plurality of routing nodes taking effect is avoided, thereby improving route configuration efficiency of configuring an access route of the target microservice.

Optionally, the at least one routing node includes a first routing node and a second routing node, and the route configuration policy indicates that a route configuration ranking of the first routing node is before that of the second routing node. The sending the route configuration instruction to the at least one routing node based on the target routing information of the at least one routing node and the route configuration policy includes: sending a first configuration instruction to the first routing node, where the first configuration instruction carries target routing information of the first routing node; and sending a second configuration instruction to the second routing node if real-time routing information of the first routing node is the same as the target routing information of the first routing node, where the second configuration instruction carries target routing information of the second routing node. The determining, if the real-time routing information of the at least one routing node is the same as the respective target routing information of the at least one routing node, that route configuration of the target microservice is completed includes: determining, if real-time routing information of the second routing node is the same as the target routing information of the second routing node, that route configuration of the target microservice is completed.

In other words, in this application, routing information is sequentially configured for the at least one routing node based on the route configuration policy, and a configuration instruction is sent to a next node only after a previous routing node completes routing information configuration, thereby ensuring that there is no race condition in route configuration of the plurality of routing nodes taking effect.

Optionally, the target microservice includes a newly added microservice, the first routing node is a routing node connected to the newly added microservice, the first routing node is connected to the second routing node, and the second routing node includes a routing node between the first routing node and a root routing node that receives user traffic.

In other words, during configuration of an access route of the newly added microservice, routing information of the routing node connected to the newly added microservice is first configured, then routing information of a next routing node is sequentially configured, and finally routing information of the root routing node is configured.

Optionally, the target microservice includes an original microservice, the route configuration information indicates the original microservice to switch from a third routing node to the first routing node, the third routing node is a routing node connected to the original microservice before switching, and the first routing node is a routing node connected to the original microservice after switching.

Optionally, the at least one routing node further includes the third routing node, and the second routing node is a routing node connected to the first routing node and the third routing node. If the real-time routing information of the second routing node is the same as the target routing information of the second routing node, the method further includes: sending a first deletion instruction to the third routing node, where the first deletion instruction indicates the third routing node to delete routing information of the original microservice.

In other words, when an access route of the original microservice is switched between different clusters, routing information of the at least one routing node on an access path of the original microservice after switching is first configured, and then routing information of a related routing node on an access path of the original microservice before switching is deleted.

Optionally, the at least one routing node further includes the third routing node and a fourth routing node, the second routing node is a routing node connected to the first routing node, and the fourth routing node is a routing node connected to the third routing node. If the real-time routing information of the second routing node is the same as the target routing information of the second routing node, the method further includes: sending a second deletion instruction to the fourth routing node, where the second deletion instruction indicates the fourth routing node to delete routing information of the original microservice.

In other words, when an access route of the original microservice is switched between different regions, routing information of at least one routing node on an access path of the original microservice after switching is first configured, and then routing information of a related routing node on an access path of the original microservice before switching is deleted.

Optionally, the target microservice includes an original microservice, the route configuration information indicates to delete routing information of the original microservice, the first routing node is a root routing node that receives user traffic, the first routing node is connected to the second routing node, and the second routing node includes a routing node between the original microservice and the first routing node.

In other words, when the access route of the original microservice is deleted, routing information of the original microservice on the root routing node may be directly deleted. Certainly, after the routing information of the original microservice on the root routing node is deleted, routing information of a next routing node may be sequentially configured, and finally, routing information on the routing node connected to the original microservice is deleted.

Optionally, the route configuration information further includes one or more of a domain name, context information, and an identifier of the target microservice, where the domain name indicates a network region to which the target microservice belongs, and the context information indicates a cluster to which the target microservice belongs.

Optionally, the at least one routing node includes one or more of a load balancer gateway, a proxy server, an Ingress gateway, and a Gateway gateway.

According to a second aspect, a route configuration apparatus is provided. The route configuration apparatus has a function of implementing behavior in the route configuration method in the first aspect. The route configuration apparatus includes at least one module, and the at least one module is configured to implement the route configuration method provided in the first aspect.

According to a third aspect, a compute device cluster is provided. The compute device cluster includes at least one compute device. Each compute device includes a processor and a memory.

The processor of the at least one compute device is configured to execute instructions stored in the memory of the at least one compute device, to cause the compute device cluster to perform the route configuration method in the first aspect.

According to a fourth aspect, a computer-readable storage medium is provided. The storage medium includes computer program instructions, and when the computer program instructions are executed by a compute device cluster, the compute device cluster performs the route configuration method in the first aspect.

According to a fifth aspect, a computer program product including instructions is provided, and when the instructions are run by a compute device cluster, the compute device cluster is caused to perform the route configuration method in the first aspect.

Technical effects achieved in the second aspect, the third aspect, the fourth aspect, and the fifth aspect are similar to the technical effects achieved by the corresponding technical means in the first aspect. Details are not described herein again.

### BRIEF DESCRIPTION OF DRAWINGS

FIG. 1 is a diagram of user traffic scheduling in a microservice architecture according to an embodiment of this application;
FIG. 2 is a schematic flowchart of a route configuration method according to an embodiment of this application;
FIG. 3 is a diagram of route configuration of a newly added microservice according to an embodiment of this application;
FIG. 4 is a diagram of route switching of an original microservice according to an embodiment of this application;
FIG. 5 is another diagram of route switching of an original microservice according to an embodiment of this application;
FIG. 6 is a diagram of route deletion of an original microservice according to an embodiment of this application;
FIG. 7 is a logical diagram of route configuration performed by a global routing controller on a plurality of cascaded routing nodes according to an embodiment of this application;
FIG. 8 is a diagram of a structure of a route configuration apparatus according to an embodiment of this application;
FIG. 9 is a diagram of a structure of a compute device according to an embodiment of this application;
FIG. 10 is a diagram of a structure of a compute device cluster according to an embodiment of this application; and
FIG. 11 is a diagram of a network connection relationship between compute devices according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before a route configuration method provided in embodiments of this application is explained and described, terms and application scenarios in embodiments of this application are first described.

First, terms in embodiments of this application are described.

### 1. Load balancer (load balancer, LB)

The load balancer is a computer technology used to distribute loads between a plurality of compute devices (compute device clusters), servers (server groups), network connections, central processing units (central processing unit, CPU), disk drives, or other resources, to optimize resource usage, maximize a throughput, minimize response time, and avoid overload.

### 2. Elastic load balancer (elastic load balancer, ELB)

The elastic load balancer is a traffic scheduling service that distributes access requests to a plurality of backend elastic servers according to a forwarding rule, and expands external service capabilities of application systems through traffic distributing, improving fault tolerance capabilities of applications.

### 3. Disaster recovery

Two or more systems with the same functions are deployed in two places that are geographically far away from each other. Health status monitoring and function switching may be performed between these systems. When one system stops working due to an accident (such as a fire or earthquake), an application may switch to another system for running.

### 4. Region (Region)

A collection of infrastructure services in a geographic area may be referred to as a region. For example, a server in city A and a server in province B may be respectively referred to as a server in region A and a server in region B.

### 5. Availability zone (availability zone, AZ)

Generally, a region includes a plurality of AZs, and an AZ includes a plurality of data centers. Two AZs are designed independent of each other and have independent power supply systems and independent networks. If one AZ is faulty, the other AZ can still run normally.

### 6. Kubernetes (K8s for short)

K8s is a container orchestration engine that is developed by Google, and supports automatic deployment, large-scale scaling, and application containerization management. When an application is deployed in a production environment, a plurality of instances of the application are usually deployed for load balancing of application requests. In K8s, a plurality of containers may be created, and each container runs an application instance. A built-in load balancing policy is used to manage, discover, and access this group of application instances, for which O&M engineers do not need to perform complex manual configuration and processing.

### 7. Istio

Istio is a service mesh that provides a transparent and language-independent method, to flexibly and easily implement automation of application network functions. Istio is a common solution for managing different microservices that constitute a cloud native application. Istio also supports communication and data sharing between these microservices.

### 8. Smart proxy (Envoy)

The smart proxy is a layer L7 proxy and communication bus designed for a large-scale modern service architecture and has the following features: supporting a layer L3/L4/L7 filter (Filter), supporting layer L7 hypertext transfer protocol (hypertext transfer protocol, HTTP) routing, supporting Google remote procedure call (Google remote procedure call, gRPC)/HTTP2/HTTP3, service discovery, dynamic configuration, and the like.

The following describes an application scenario of the route configuration method provided in embodiments of this application.

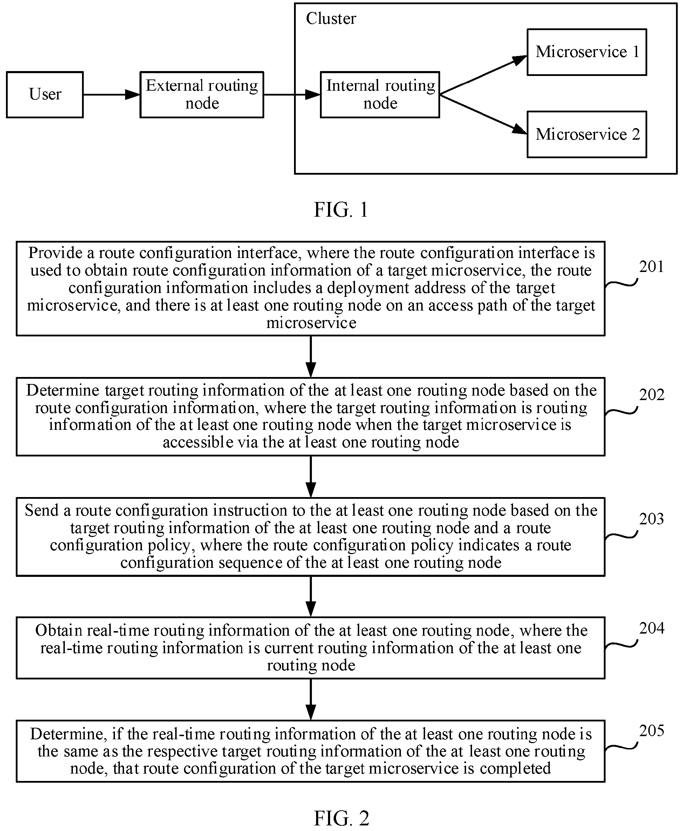

Refer to a microservice deployment architecture shown in FIG. 1. Service traffic scheduling and load balancing are generally implemented through collaboration of a plurality of routing nodes. An external routing node is responsible for routing user traffic to a cluster, and an internal routing node is responsible for routing user traffic outside the cluster to a corresponding workload (that is, a microservice). The cluster may be implemented by using K8s, or may be implemented by using Istio. This is not limited in embodiments of this application.

Refer to FIG. 1. When a route of a microservice 1 is configured, corresponding routing information needs to be configured on both an external routing node and an internal routing node, so that when user traffic accesses the microservice 1, the external routing node routes the user traffic to the internal routing node in a cluster based on the configured routing information, and the internal routing node routes the user traffic to the microservice 1 based on the configured routing information.

It should be noted that, in FIG. 1, that one external routing node is associated with an internal routing node in one cluster and two microservices are deployed in the cluster is used merely as an example, and does not constitute a limitation on a quantity of routing nodes, a quantity of clusters, and a quantity of microservices deployed in the cluster that can be set in the microservice deployment architecture.

Based on the foregoing microservice deployment architecture, when a service access route of a target microservice is configured, routing information of a plurality of routing nodes on the access path of the target microservice usually needs to be configured. However, each routing node has an independent route controller, and a corresponding route controller needs to be separately operated to configure the routing information of the plurality of routing nodes. During routing information configuration, cases such as incorrect configuration and missing configuration may easily occur, and consequently, the target microservice is unavailable.

In addition, configuring the routing information of the plurality of routing nodes is asynchronously operated, and there is a race condition in route configuration of the plurality of cascaded routing nodes taking effect. As a result, the microservice may be unavailable. For example, when the target microservice is a newly added microservice, if route configuration of the external routing node takes effect before route configuration of the internal routing node takes effect, when the external routing node routes user traffic to the internal routing node based on the configured routing information, the internal routing node cannot route the user traffic to a corresponding microservice based on the configured routing information because the route configuration has not taken effect. As a result, the microservice fails to be accessed.

In view of this, embodiments of this application provide a route configuration method. A compute device is used to manage and control route configuration information and route configuration occasions of all routing nodes in a microservice architecture, and control the routing nodes to sequentially perform a route configuration operation in a specified route configuration sequence. In this way, a race condition in route configuration of a plurality of routing nodes taking effect is avoided, and route configuration efficiency is improved.

FIG. 2 is a flowchart of a route configuration method according to an embodiment of this application. The method is applied to any compute device or compute device cluster. The method includes the following steps.

**Step 201:** Provide a route configuration interface, where the route configuration interface is used to obtain route configuration information of a target microservice, the route configuration information includes a deployment address of the target microservice, and there is at least one routing node on an access path of the target microservice.

The route configuration interface is used by an administrator to input the route configuration information of the target microservice. After the administrator inputs the route configuration information of the target microservice, a compute device may obtain the route configuration information, and perform the following step 202 to step 205.

In some embodiments, the route configuration information indicates a route configuration operation of the target microservice, and the route configuration information may include configuring routing information of the target microservice, changing routing information of the target microservice, and deleting routing information of the target microservice.

Optionally, the route configuration information further includes one or more of a domain name, context information, and an identifier of the target microservice. The domain name indicates a network region to which the target microservice belongs, the context information indicates a cluster to which the target microservice belongs, and the identifier may be a number of the target microservice.

In an example, route configuration information may be https://domain/msl, and a backend of the route configuration information points to an access address ms1.namespace1 of a target microservice ms1 in a cluster.

After determining a deployment address of the target microservice based on the route configuration information, the compute device obtains network topology information, and determines, based on the network topology information and the deployment address of the target microservice, at least one routing node on an access path of the target microservice. The network topology information includes a routing relationship between a plurality of routing nodes and a plurality of microservices in a microservice architecture.

In some embodiments, the at least one routing node on the access path of the target microservice includes one or more of a load balancer gateway, a proxy server, an Ingress gateway, and a Gateway gateway.

The load balancer gateway and the proxy server are usually used as external routing nodes outside a cluster, to route user traffic to a corresponding cluster. The load balancer gateway may be an elastic load balancer (elastic load balancer, ELB) gateway, an application load balancer (application load balancer, ALB), a network load balancer (network load balancing, NLB), or the like. The proxy server may be an Nginx instance, an Envoy instance, a Kong instance, or the like. The Ingress gateway and the Gateway gateway are usually used as internal routing nodes of a cluster, to route user traffic outside the cluster to a corresponding microservice. The Ingress gateway is a gateway in a K8s cluster, and an underlying layer of the Ingress gateway may be implemented by using an Nginx instance and an Envoy instance. The Gateway gateway is a gateway in an Istio cluster, and an underlying layer of the Gateway gateway is implemented by using an Envoy instance by default.

It should be noted that, with a change of the microservice architecture, another type of gateway or proxy device may be derived from the external routing node and the internal routing node. A specific type and an implementation of the at least one routing node are not limited in this embodiment of this application, and the foregoing several types are merely used as examples for description.

**Step 202:** Determine target routing information of the at least one routing node based on the route configuration information, where the target routing information is routing information of the at least one routing node when the target microservice is accessible via the at least one routing node.

Target routing information of a routing node includes a node address of a routing node to which the routing node is cascaded on the access path of the target microservice, or the deployment address of the target microservice. Whether the target routing information includes the node address of the routing node or the deployment address of the target microservice depends on whether the routing node is directly connected to the target microservice. When the routing node is directly connected to the target microservice, the target routing information of the routing node includes the deployment address of the target microservice. When there is another routing node between the routing node and the target microservice, the target routing information of the routing node includes a node address of a next routing node to which the routing node is cascaded.

When there is only one routing node on the access path of the target microservice, that is, a node quantity of the at least one routing node is one, the routing node is directly connected to the target microservice, and the routing node may directly route user traffic to the target microservice. In this case, target routing information of the routing node is the deployment address of the target microservice.

When there are a plurality of cascaded routing nodes on the access path of the target microservice, that is, a node quantity of the at least one routing node is more than one, the plurality of cascaded routing nodes sequentially route user traffic to the target microservice. In this case, target routing information of the plurality of routing nodes includes an address of a cascaded next routing node or the deployment address of the target microservice. Target routing information of a root routing node that receives the user traffic is the address of the cascaded next routing node, and target routing information of a routing node connected to the target microservice is the deployment address of the target microservice.

**Step 203:** Send a route configuration instruction to the at least one routing node based on the target routing information of the at least one routing node and a route configuration policy, where the route configuration policy indicates a route configuration sequence of the at least one routing node.

In some embodiments, the at least one routing node includes a first routing node, and an implementation process of step 203 is: sending a first configuration instruction to the first routing node, where the first configuration instruction carries target routing information of the first routing node.

In an example, it is assumed that the target microservice is ms1. When the deployment address of the target microservice in the cluster is modified from ms1.namespace1 to namespace2, that is, the target microservice is migrated and deployed in a container or a mesh indicated by namespace2, only the target routing information of the first routing node in the cluster needs to be modified. In this case, when user traffic entering the cluster passes through the first routing node, the first routing node forwards the user traffic based on namespace2, to enable a user to access the target microservice ms1.

It should be understood that this example is described by merely using an example in which the cluster includes one routing node. When the cluster includes a plurality of routing nodes, target routing information respectively corresponding to the plurality of routing nodes in the cluster may be sequentially configured with reference to the following route configuration manner of the plurality of routing nodes.

In some embodiments, the at least one routing node includes a first routing node and a second routing node, and the route configuration policy indicates that a route configuration ranking of the first routing node is before that of the second routing node. In view of this, an implementation process of step 203 may be: sending a first configuration instruction to the first routing node, where the first configuration instruction carries target routing information of the first routing node; and sending a second configuration instruction to the second routing node if real-time routing information of the first routing node is the same as the target routing information of the first routing node, where the second configuration instruction carries target routing information of the second routing node.

It should be noted that the route configuration information may be configuring routing information for a newly added microservice, may be configuring to switch routing information for an original microservice, or may be deleting routing information of an original microservice. Therefore, based on different route configuration information, locations of the first routing node and the second routing node on the access path of the target microservice are different, and manners of sequentially configuring target routing information for the first routing node and the second routing node according to the route configuration policy are also different. The following separately provides descriptions.

**In a first route configuration case,** the target microservice includes a newly added microservice, the first routing node is a routing node connected to the newly added microservice, the first routing node is connected to the second routing node, and the second routing node includes a routing node between the first routing node and a root routing node that receives user traffic.

There may be one or more second routing nodes. When there is one second routing node, the second routing node is directly connected to the first routing node and the root routing node. When there are a plurality of second routing nodes, one second routing node close to a newly added microservice side is connected to the first routing node, one second routing node close to a user traffic receiving side is connected to the root routing node, and there is at least one second routing node that is cascaded in sequence between the two second routing nodes.

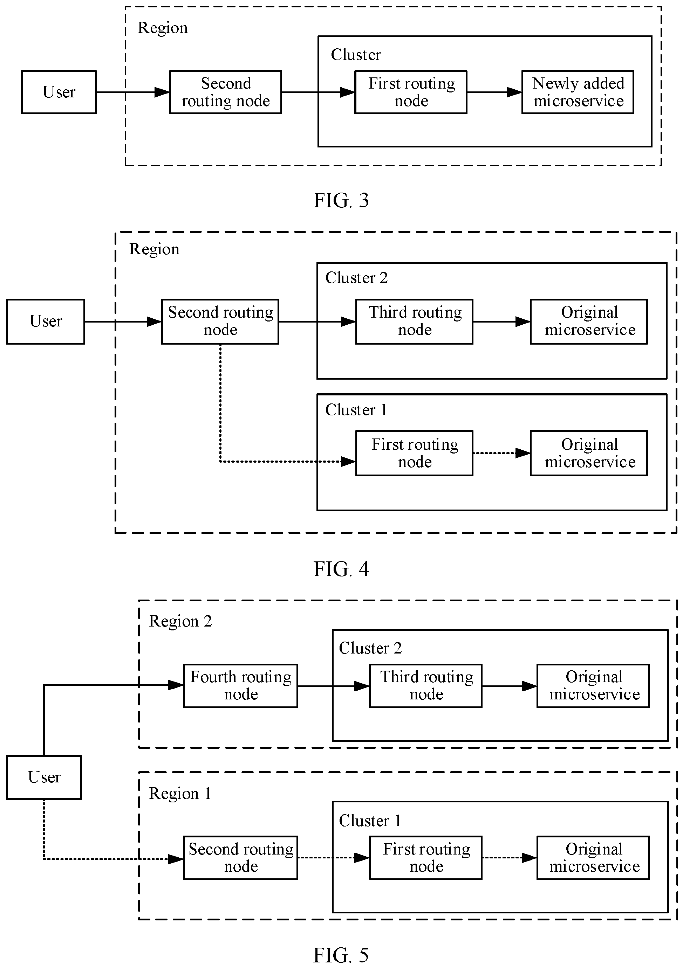

Refer to FIG. 3. A route configuration process of a newly added microservice may be: first sending a first configuration instruction to a first routing node connected to the newly added microservice, where the first configuration instruction carries target routing information of the first routing node; and sending a second configuration instruction to a second routing node if real-time routing information of the first routing node is the same as the target routing information of the first routing node, which indicates that route configuration of the first routing node is completed, where the second configuration instruction carries target routing information of the second routing node. Route configuration of the newly added microservice is completed until real-time routing information of the second routing node is the same as the target routing information of the second routing node.

It should be understood that, FIG. 3 shows merely an example in which there is one second routing node and the second routing node is a root routing node that receives user traffic, and does not constitute a limitation on a quantity of routing nodes that can be set between the root routing node and the first routing node.

Optionally, when there are a plurality of second routing nodes, in other words, the second routing node includes a plurality of sub-routing nodes, the route configuration policy further indicates that the route configuration ranking of the first routing node connected to the newly added microservice is before those of the sub-routing nodes, and a route configuration ranking of a sub-routing node that is close to the first routing node and that is in the sub-routing nodes is before that of a sub-routing node close to the root routing node. In other words, the route configuration policy indicates to sequentially perform a route configuration operation "from inside to outside" in a sequence of "the first routing node connected to the newly added microservice-the second routing node-the root routing node".

It should be noted that "inside" refers to a side that is on an access path of the newly added microservice and that is close to the newly added microservice, and "outside" refers to a side that receives user traffic, that is, a side that is close to the root routing node.

**In a second route configuration case,** the target microservice includes an original microservice, the route configuration information indicates the original microservice to switch from a third routing node to the first routing node, the third routing node is a routing node connected to the original microservice before path switching, and the first routing node is a routing node connected to the original microservice after path switching.

In other words, the route configuration information indicates to change routing information of the original microservice, so that user traffic is forwarded by using the first routing node when the original microservice is subsequently accessed.

It should be noted that the first routing node and the third routing node before and after switching may be in different clusters of a same region, or may be in different clusters of different regions. A route switching manner of the original microservice varies with different location relationships between the first routing node and the third routing node. The following separately provides descriptions.

**In a first route switching manner,** the at least one routing node for which route configuration needs to be performed further includes the third routing node, where the second routing node is a routing node connected to the first routing node and the third routing node.

In other words, the first routing node and the third routing node are located in different clusters of a same region, the second routing node that routes user traffic to different clusters is set in the region, and both the first routing node and the third routing node that are located in different clusters need to be connected to the second routing node.

Refer to FIG. 4. In a region, when an access path of an original microservice switches from a third routing node in a cluster 2 to a first routing node in a cluster 1, a switching process may be: sending a first configuration instruction to the first routing node after switching, where the first configuration instruction carries target routing information of the first routing node; and sending a second configuration instruction to a second routing node if real-time routing information of the first routing node is the same as the target routing information of the first routing node, which indicates that route configuration of the first routing node is completed, where the second configuration instruction carries target routing information of the second routing node. Route configuration of the original microservice after switching is completed until real-time routing information of the second routing node is the same as the target routing information of the second routing node.

In some embodiments, after it is determined that the real-time routing information of the second routing node is the same as the target routing information of the second routing node, a first deletion instruction may be further sent to the third routing node, where the first deletion instruction indicates the third routing node to delete routing information of the original microservice.

The first deletion instruction may carry an identifier or a deployment address of the original microservice. This is not limited in this embodiment of this application.

In other words, to avoid storing redundant routing information on a routing node, after the routing information of the original microservice is configured on the first routing node and the second routing node, the routing information of the original microservice may be deleted from the third routing node.

**In a second route switching manner,** the at least one routing node for which route configuration needs to be performed further includes the third routing node and a fourth routing node, where the second routing node is the routing node connected to the first routing node, and the fourth routing node is a routing node connected to the third routing node.

In other words, the first routing node and the third routing node are located in different regions, and a routing node that routes user traffic to different clusters is set in each region. In this case, the first routing node is connected to the second routing node that receives user traffic in a corresponding region, and the third routing node is connected to the fourth routing node that receives user traffic in a corresponding region.

Refer to FIG. 5. In different regions, when an access path of an original microservice switches from a third routing node in a cluster 2 of a region 2 to a first routing node in a cluster 1 of a region 1, a switching process may be: sending a first configuration instruction to the first routing node after switching, where the first configuration instruction carries target routing information of the first routing node; and sending a second configuration instruction to a second routing node if real-time routing information of the first routing node is the same as the target routing information of the first routing node, which indicates that route configuration of the first routing node is completed, where the second configuration instruction carries target routing information of the second routing node. Route configuration of the original microservice after switching is completed until real-time routing information of the second routing node is the same as the target routing information of the second routing node.

In some embodiments, after it is determined that the real-time routing information of the second routing node is the same as the target routing information of the second routing node, a second deletion instruction may be further sent to the fourth routing node, where the second deletion instruction indicates the fourth routing node to delete routing information of the original microservice.

The second deletion instruction carries an identifier or a deployment address of the original microservice, so that the fourth routing node may delete, based on the identifier or the deployment address, the routing information related to the original microservice from routing information stored in the fourth routing node.

Optionally, if real-time routing information of the fourth routing node is the same as target routing information of the fourth routing node, a first deletion instruction may continue to be sent to the third routing node, to indicate the third routing node to also delete the routing information of the original microservice.

The first deletion instruction may carry the identifier or the deployment address of the original microservice. This is not limited in this embodiment of this application.

In other words, to avoid storing redundant routing information on each routing node, after the routing information of the original microservice is configured on the first routing node and the second routing node, the routing information of the original microservice may be sequentially deleted from the third routing node and the fourth routing node.

**In a third route configuration** case, the target microservice includes an original microservice, the route configuration information indicates to delete routing information of the original microservice, the first routing node is a root routing node that receives user traffic, the first routing node is connected to the second routing node, and the second routing node includes a routing node between the original microservice and the first routing node.

There may be one or more second routing nodes. When there is one second routing node, the second routing node is directly connected to the first routing node and the original microservice. When there are a plurality of second routing nodes, one second routing node is directly connected to the original microservice, and there is at least one second routing node that is cascaded in sequence between the second routing node and the first routing node (the root routing node).

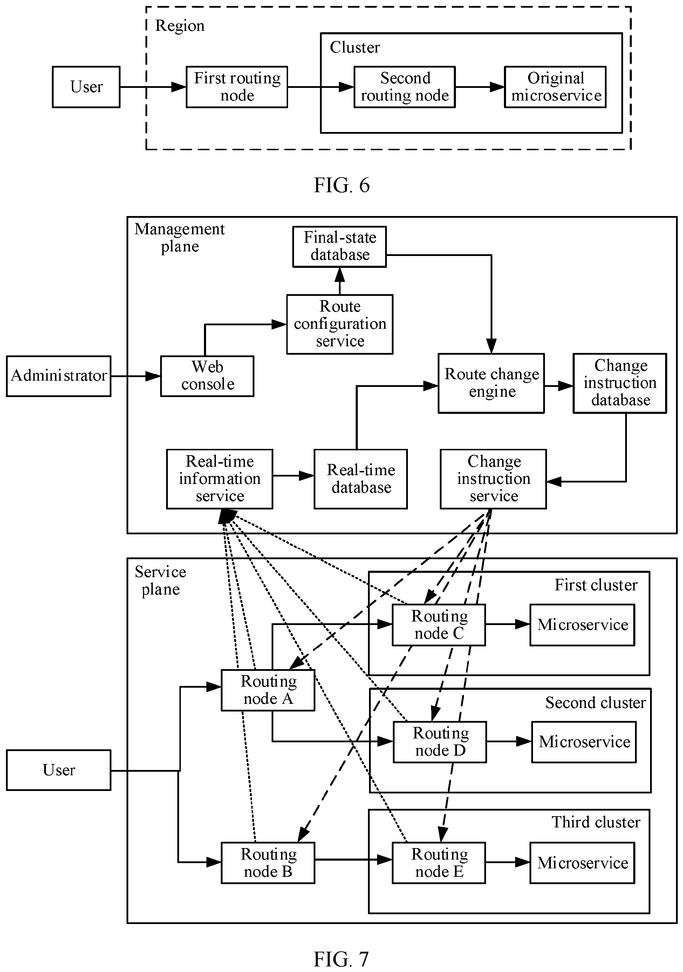

Refer to FIG. 6. A route deletion process of an original microservice may be: first sending a first configuration instruction to a first routing node that receives user traffic, where the first configuration instruction carries target routing information of the first routing node; and sending a second configuration instruction to a second routing node if real-time routing information of the first routing node is the same as the target routing information of the first routing node, which indicates that route configuration of the first routing node is completed, where the second configuration instruction carries target routing information of the second routing node. Route deletion of the original microservice is completed until real-time routing information of the second routing node is the same as the target routing information of the second routing node.

It should be understood that, FIG. 6 shows merely an example in which there is one second routing node and the second routing node is a routing node connected to a microservice, and does not constitute a limitation on a quantity of routing nodes that can be set between the first routing node and the original microservice.

Optionally, when there are a plurality of second routing nodes, in other words, the second routing node includes a plurality of sub-routing nodes, the route configuration policy indicates that a route configuration ranking of the first routing node is before those of sub-routing nodes, and the route configuration rankings of the sub-routing nodes are before that of a sub-routing node connected to a microservice. In other words, a route deletion operation is sequentially performed "from outside to inside" in a sequence of "the first routing node (the root routing node)-the second routing node-the routing node connected to the microservice".

It should be noted that "inside" refers to a side that is on an access path of the original microservice and that is close to the original microservice, and "outside" refers to a side that receives user traffic, that is, a side that is close to the root routing node.

**Step 204:** Obtain real-time routing information of the at least one routing node, where the real-time routing information is current routing information of the at least one routing node.

It should be noted that, in a route configuration process, real-time routing information of a routing node can reflect a route configuration progress of the routing node. For a same routing node, if real-time routing information of the routing node is the same as target routing information of the routing node, it indicates that the routing node has completed a route configuration operation based on the target routing information, that is, the target routing information has taken effect on the routing node. If real-time routing information of the routing node is different from target routing information of the routing node, it indicates that the routing node has not received the target routing information, or has not completed a route configuration operation based on the target routing information, that is, the target routing information does not take effect on the routing node.

In some embodiments, an implementation process of step 204 may be: After sending a configuration instruction to the at least one routing node, the compute device obtains real-time routing information from the at least one routing node based on a route collection periodicity. Alternatively, a plurality of routing nodes managed by the compute device periodically report real-time routing information of the routing nodes to the compute device based on a route reporting periodicity, so that the compute device may obtain the real-time routing information of the at least one routing node.

The route collection periodicity and the route reporting periodicity are any numerical values set by the administrator, and a numerical value of the route collection periodicity may be the same as or different from that of the route reporting periodicity. This is not limited in this embodiment of this application. For example, the route collection periodicity may be 10 seconds, and the route reporting periodicity may be 30 seconds.

**Step 205:** Determine, if the real-time routing information of the at least one routing node is the same as the respective target routing information of the at least one routing node, that route configuration of the target microservice is completed.

Corresponding to step 203, when the at least one routing node includes the first routing node, it is determined, if the real-time routing information of the first routing node is the same as the target routing information of the first routing node, that route configuration of the target microservice is completed. When the at least one routing node includes the first routing node and the second routing node, and the route configuration policy indicates that the route configuration ranking of the first routing node is before that of the second routing node, it is determined, if the real-time routing information of the second routing node is the same as the target routing information of the second routing node, that route configuration of the target microservice is completed.

In other words, if the node quantity of the at least one routing node is more than one, it is determined, when real-time routing information of a last routing node that receives a route configuration instruction is the same as corresponding target routing information, that route configuration of the target microservice is completed.

In conclusion, in this embodiment of this application, after obtaining the route configuration information of the target microservice on the route configuration interface, the compute device may determine, based on the route configuration information, the at least one routing node on the access path of the target microservice and the target routing information of the at least one routing node. Then, the route configuration instruction is sent to the at least one routing node based on the target routing information of the at least one routing node and the route configuration policy, to control the at least one routing node to sequentially perform a route configuration operation based on the configuration sequence. In this way, a race condition in route configuration of the plurality of routing nodes taking effect is avoided, thereby improving route configuration efficiency of configuring an access route of the target microservice.

In some embodiments, when the foregoing route configuration method is implemented, embodiments of this application further provide a global route controller (global route controller, GRC). The global route controller supports a user (the user herein refers to an administrator who uses the global route controller) in configuring a layer 7 routing rule. Core components of the global route controller include the following.

### (1) Web console

The web console provides a web interface that can be operated by an administrator, supports configuration of various routing rules, configures a backend microservice (running in a specific cluster and possibly across clouds, regions, or availability zones) for a domain name (domain), a context (context), or the like, and allocates or changes user traffic weights for different backend microservices.

During specific implementation, the web console is configured to receive route configuration information that is of a target microservice and that is input by the administrator, where the route configuration information includes a deployment address of the target microservice.

### (2) Route configuration service

The route configuration service determines, by analyzing network topology information, at least one routing node on an access path of the target microservice; generates, based on the route configuration information of the administrator, target routing information respectively corresponding to the at least one routing node, and stores the target routing information in a final-state database.

### (3) Real-time information service

The real-time information service is used to collect or receive real-time routing information of each routing node, form real-time route configuration, and store the real-time routing information of each routing node in a real-time database.

### (4) Route change engine

The route change engine dynamically generates a next-step route configuration instruction based on a state difference between the final-state database and the real-time database, so that overall route configuration of a system smoothly transits to a next route configuration state. After generating the next-step route configuration instruction, the route change engine may write the next-step route configuration instruction into a change instruction database.

### (5) Change instruction service

The change instruction service obtains a route configuration instruction from the change instruction database, and provides an aggregated discovery service (aggregated discovery service, ADS) in a remote procedure call manner, so that routing nodes can update routing information incrementally and losslessly, and sequentially complete route configuration.

It should be noted that the final-state database, the real-time database, and the change instruction database may be three independently deployed databases, or may be combined into one database. This is not limited in this embodiment of this application.

A level-2 routing node is used as an example, to explain a process in which a global route controller implements multi-node route configuration and management.

Refer to FIG. 7. It is assumed that two external routing nodes: a routing node A and a routing node B, and three internal routing nodes: a routing node C, a routing node D, and a routing node E are deployed on a service plane. The routing node C is a routing node in a first cluster, the routing node D is a routing node in a second cluster, the routing node E is a routing node in a third cluster, and one microservice is deployed in each of the three clusters. The global route controller works on a management plane, and a user is unaware of a route configuration state on the management plane when accessing the service plane.

In view of this, the global route controller manages the routing node A, the routing node B, the routing node C, the routing node D, and the routing node E. A process of implementing global route management and configuration includes the following steps.

S1: An administrator inputs route configuration information of a target microservice via a web console of the global route controller.

S2: A route configuration service generates target routing information of at least one routing node on an access path of the target microservice based on the route configuration information, and stores the target routing information of the at least one routing node in a final-state database.

S3: A route change engine obtains real-time routing information and the target routing information of the at least one routing node from a real-time database and the final-state database respectively, generates a next-step route configuration instruction according to a route configuration policy, and stores the next-step route configuration instruction into a change instruction database.

The route configuration policy indicates a route configuration sequence of the at least one routing node, and the next-step route configuration instruction carries routing information of a routing node that is determined based on the route configuration sequence indicated by the route configuration policy and that performs a route configuration operation in a next step.

S4: A change instruction service obtains the route configuration instruction from the change instruction database, and provides, in a remote procedure call manner, an ADS service that can be identified by the routing node, so that a corresponding routing node can obtain the route configuration instruction, to perform the route configuration operation.

S5: The at least one routing node incrementally obtains, from the change instruction service, a route configuration instruction to be executed currently, and executes the route configuration instruction, so that the route configuration instruction takes effect and new routing information is formed.

S6: In the foregoing process, the at least one routing node continuously/periodically reports real-time routing information of the at least one routing node to a real-time information service, and the real-time information service writes the real-time routing information of the at least one routing node into the real-time database.

S7: Cyclically perform steps S3 to S7 until target routing information of each of the at least one routing node on the access path of the target microservice is consistent with corresponding real-time routing information in the real-time database, so that route configuration of the target microservice is completed.

In the foregoing process, the routing node A, the routing node B, the routing node C, the routing node D, and the routing node E may all interact with the real-time information service, to report real-time routing information of the routing node A, the routing node B, the routing node C, the routing node D, and the routing node E, and may also interact with the change instruction service, to obtain a route configuration instruction that needs to be executed by the routing node A, the routing node B, the routing node C, the routing node D, and the routing node E.

It should be understood that, in the foregoing process, a routing node on the access path of the target microservice varies with different route configuration information of the target microservice. However, logic for implementing multi-node route configuration is similar. For details, refer to the implementation process of the foregoing embodiment. Details are not described herein again.

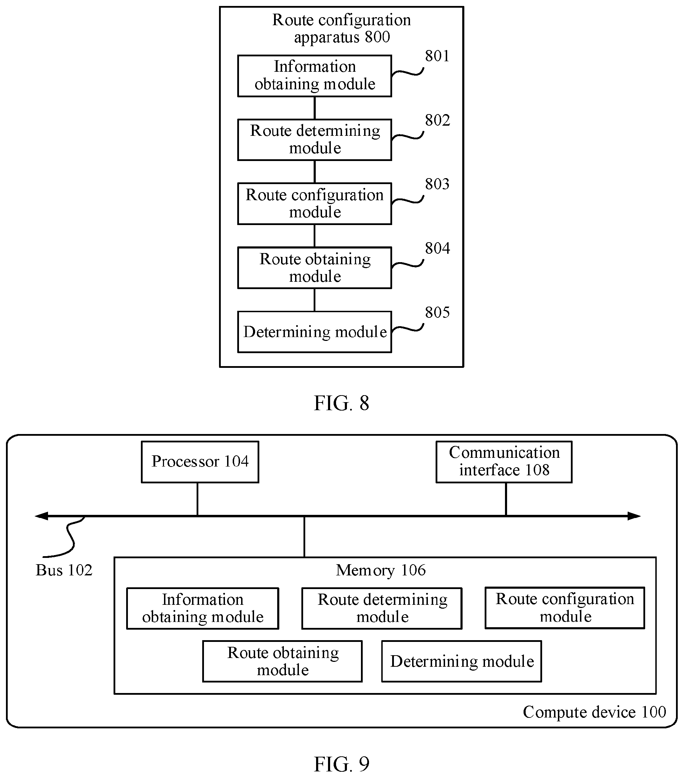

FIG. 8 is a diagram of a structure of a route configuration apparatus according to an embodiment of this application. The route configuration apparatus may be implemented as a part or all of a compute device by using software, hardware, or a combination thereof. Refer to FIG. 8. The route configuration apparatus 800 includes an information obtaining module 801, a route determining module 802, a route configuration module 803, a route obtaining module 804, and a determining module 805.

The information obtaining module 801 is configured to provide a route configuration interface, where the route configuration interface is used to obtain route configuration information of a target microservice, the route configuration information includes a deployment address of the target microservice, and there is at least one routing node on an access path of the target microservice.

The route determining module 802 is configured to determine target routing information of the at least one routing node based on the route configuration information, where the target routing information is routing information of the at least one routing node when the target microservice is accessible via the at least one routing node.

The route configuration module 803 is configured to send a route configuration instruction to the at least one routing node based on the target routing information of the at least one routing node and a route configuration policy, where the route configuration policy indicates a route configuration sequence of the at least one routing node.

The route obtaining module 804 is configured to obtain real-time routing information of the at least one routing node, where the real-time routing information is current routing information of the at least one routing node.

The determining module 805 is configured to determine, if the real-time routing information of the at least one routing node is the same as the respective target routing information of the at least one routing node, that route configuration of the target microservice is completed.

The information obtaining module, the route determining module, the route configuration module, the route obtaining module, and the determining module may all be implemented by using software, or may be implemented by using hardware. For example, the following uses the route configuration module as an example to describe an implementation of the route configuration module. Similarly, for implementations of the information obtaining module, the route determining module, the route obtaining module, and the determining module, refer to an implementation of the route configuration module.

A module is used as an example of a software functional unit, and the route configuration module may include code run on a computing instance. The computing instance may include at least one of a physical host (a compute device), a virtual machine, and a container. Further, there may be one or more computing instances. For example, the route configuration module may include code run on a plurality of hosts/virtual machines/containers. It should be noted that the plurality of hosts/virtual machines/containers configured to run the code may be distributed in a same region (Region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is set in one region. A communication gateway needs to be set in each VPC for communication between two VPCs in a same region or between VPCs in different regions. Interconnection between VPCs is implemented through the communication gateway.

A module is used as an example of a hardware functional unit, and the route configuration module may include at least one compute device, such as a server. Alternatively, the route configuration module may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the route configuration module may be distributed in a same region, or may be distributed in different regions. The plurality of compute devices included in the route configuration module may be distributed in a same AZ, or may be distributed in different AZs. Similarly, the plurality of compute devices included in the route configuration module may be distributed on a same VPC, or may be distributed on a plurality of VPCs. The plurality of compute devices may be any combination of compute devices such as a server, an ASIC, a PLD, a CPLD, an FPGA, and a GAL.

It should be noted that, in another embodiment, the route configuration module may be configured to perform any step in the route configuration method, and the information obtaining module may be configured to perform any step in the route configuration method. Similarly, the route determining module, the route obtaining module, and the determining module may also be configured to perform any step in the route configuration method. In other words, steps that the information obtaining module, the route determining module, the route configuration module, the route obtaining module, and the determining module are responsible for implementing may be specified as required, and all functions of the route configuration apparatus are implemented by separately implementing different steps in the route configuration method by the information obtaining module, the route determining module, the route configuration module, the route obtaining module, and the determining module.

Optionally, the at least one routing node includes a first routing node and a second routing node, and the route configuration policy indicates a route configuration ranking of the first routing node is before that of the second routing node.

The route configuration module 803 includes:
a first configuration unit, configured to send a first configuration instruction to the first routing node, where the first configuration instruction carries target routing information of the first routing node; and
a second configuration unit, configured to send a second configuration instruction to the second routing node if real-time routing information of the first routing node is the same as the target routing information of the first routing node, where the second configuration instruction carries target routing information of the second routing node.

The determining module 805 is specifically configured to:
determine, if real-time routing information of the second routing node is the same as the target routing information of the second routing node, that route configuration of the target microservice is completed.

Optionally, the target microservice includes a newly added microservice, the first routing node is a routing node connected to the newly added microservice, the first routing node is connected to the second routing node, and the second routing node includes a routing node between the first routing node and a root routing node that receives user traffic.

Optionally, the target microservice includes an original microservice, the route configuration information indicates the original microservice to switch from a third routing node to the first routing node, the third routing node is a routing node connected to the original microservice before switching, and the first routing node is a routing node connected to the original microservice after switching.

Optionally, the at least one routing node further includes the third routing node, and the second routing node is a routing node connected to the first routing node and the third routing node; and if the real-time routing information of the second routing node is the same as the target routing information of the second routing node, the apparatus 800 further includes:
a route deletion module, configured to send a first deletion instruction to the third routing node, where the first deletion instruction indicates the third routing node to delete routing information of the original microservice.

Optionally, the at least one routing node further includes the third routing node and a fourth routing node, the second routing node is a routing node connected to the first routing node, and the fourth routing node is a routing node connected to the third routing node; and if the real-time routing information of the second routing node is the same as the target routing information of the second routing node, the apparatus 800 further includes:
a route deletion module, configured to send a second deletion instruction to the fourth routing node, where the second deletion instruction indicates the fourth routing node to delete routing information of the original microservice.

Optionally, the target microservice includes an original microservice, the route configuration information indicates to delete routing information of the original microservice, the first routing node is a root routing node that receives user traffic, the first routing node is connected to the second routing node, and the second routing node includes a routing node between the original microservice and the first routing node.

Optionally, the route configuration information further includes one or more of a domain name, context information, and an identifier of the target microservice, where the domain name indicates a network region to which the target microservice belongs, and the context information indicates a cluster to which the target microservice belongs.

Optionally, the at least one routing node includes one or more of a load balancer gateway, a proxy server, an Ingress gateway, and a Gateway gateway.

In this embodiment of this application, the route configuration apparatus may determine, based on the route configuration information, the at least one routing node on the access path of the target microservice and the target routing information of the at least one routing node. Then, the route configuration instruction is sent to the at least one routing node based on the target routing information of the at least one routing node and the route configuration policy, to control the at least one routing node to sequentially perform a route configuration operation based on the configuration sequence. In this way, a race condition in route configuration of the plurality of routing nodes taking effect is avoided, thereby improving route configuration efficiency of configuring an access route of the target microservice.

It should be noted that when the route configuration apparatus provided in the foregoing embodiment configures routing information on the at least one routing node, division of the foregoing functional modules is merely used as an example for description. In actual application, the foregoing functions may be allocated to different functional modules for implementation based on a requirement. In other words, an internal structure of the apparatus is divided into different functional modules to implement all or some of the functions described above. In addition, the route configuration apparatus provided in the foregoing embodiment and the route configuration method embodiment pertain to a same concept. For a specific implementation process of the route configuration apparatus, refer to the method embodiment. Details are not described herein again.

FIG. 9 is a diagram of a structure of a compute device according to an embodiment of this application. The compute device 100 includes a bus 102, a processor 104, a memory 106, and a communication interface 108. The processor 104, the memory 106, and the communication interface 108 communicate with each other through the bus 102. A quantity of processors and a quantity of memories in the compute device 100 are not limited in this embodiment of this application.

When the technical solutions provided in embodiments of this application are implemented, the compute device 100 may be used as a global route controller to manage routing information of the at least one routing node.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 9, but this does not mean that there is only one bus or only one type of bus. The bus 102 may include a path for transmitting information between the components (for example, the memory 106, the processor 104, and the communication interface 108) of the compute device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the foregoing information obtaining module, route determining module, route configuration module, route obtaining module, and determining module, to implement the route configuration method. In other words, the memory 106 stores instructions for performing the route configuration method.

The communication interface 108 implements communication between the compute device 100 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

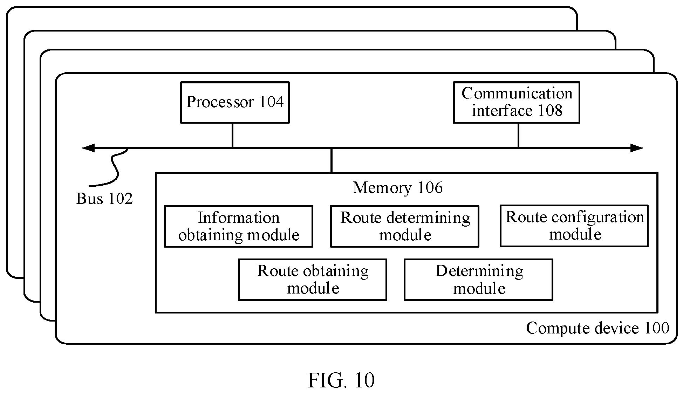

As shown in FIG. 10, the compute device cluster includes at least one compute device 100. Memories 106 in one or more compute devices 100 in the compute device cluster may store same instructions for performing the route configuration method.

Alternatively, in some possible implementations, the memories 106 in the one or more compute devices 100 in the compute device cluster may respectively store some instructions used for performing the route configuration method. In other words, a combination of the one or more compute devices 100 may jointly execute the instructions for performing the route configuration method.

It should be noted that memories 106 in different compute devices 100 in the compute device cluster may store different instructions for performing a part of functions of the route configuration apparatus. In other words, the instructions stored in the memories 106 in the different compute devices 100 may implement functions of one or more of the information obtaining module, the route determining module, the route configuration module, the route obtaining module, and the determining module.

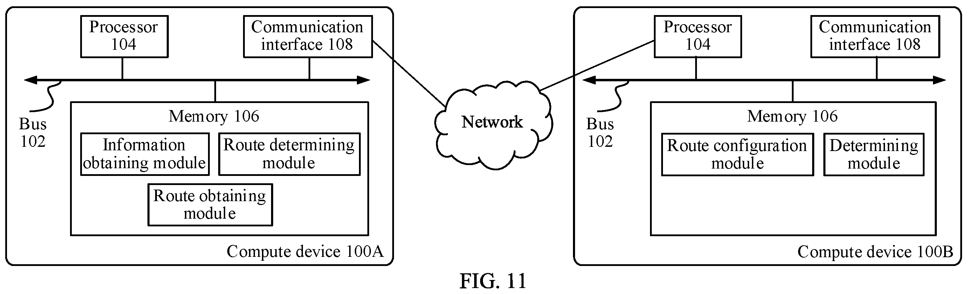

In some possible implementations, the one or more compute devices in the compute device cluster may be connected over a network. The network may be a wide area network, a local area network, or the like. FIG. 11 shows a possible implementation. As shown in FIG. 11, two compute devices 100A and 100B are connected over a network. Specifically, each compute device is connected to the network through a communication interface in the compute device. In this type of possible implementation, a memory 106 in the compute device 100A stores instructions for executing functions of the information obtaining module, the route determining module, and the route obtaining module. In addition, a memory 106 in the compute device 100B stores instructions for executing functions of the route configuration module and the determining module.

A connection manner between the compute device clusters shown in FIG. 11 may be considered based on a fact that in the route configuration method provided in this application, real-time routing information and target routing information need to be stored. Therefore, functions implemented by the route configuration module and the determining module are considered to be executed by the compute device 100B.

It should be understood that, functions of the compute device 100A shown in FIG. 11 may alternatively be completed by a plurality of compute devices 100. Similarly, functions of the compute device 100B may alternatively be completed by a plurality of compute devices 100.

An embodiment of this application further provides another compute device cluster. For a connection relationship between compute devices in the compute device cluster, refer to the similar connection manners of the compute device cluster shown in FIG. 10 and FIG. 11. A difference lies in that memories 106 in one or more compute devices 100 in the compute device cluster may store same instructions for performing the route configuration method.

Alternatively, in some possible implementations, the memories 106 in the one or more compute devices 100 in the compute device cluster may respectively store some instructions used for performing the route configuration method. In other words, a combination of the one or more compute devices 100 may jointly execute the instructions for performing the route configuration method.

An embodiment of this application further provides a computer program product including instructions. The computer program product may be software or a program product that includes the instructions and that can run on a compute device or be stored in any usable medium. When the computer program product runs on at least one compute device, the at least one compute device is caused to perform the route configuration method shown in FIG. 2.

An embodiment of this application further provides a computer-readable storage medium. The computer-readable storage medium may be any usable medium that can be stored in a compute device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions indicate the compute device to perform the route configuration method shown in FIG. 2.

It should be understood that "a plurality of" in this specification means two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. A route configuration method, wherein the method comprises:
providing a route configuration interface, wherein the route configuration interface is used to obtain route configuration information of a target microservice, the route configuration information comprises a deployment address of the target microservice, and there is at least one routing node on an access path of the target microservice;
determining target routing information of the at least one routing node based on the route configuration information, wherein the target routing information is routing information of the at least one routing node when the target microservice is accessible via the at least one routing node;
sending a route configuration instruction to the at least one routing node based on the target routing information of the at least one routing node and a route configuration policy, wherein the route configuration policy indicates a route configuration sequence of the at least one routing node;
obtaining real-time routing information of the at least one routing node, wherein the real-time routing information is current routing information of the at least one routing node; and
determining, if the real-time routing information of the at least one routing node is the same as the respective target routing information of the at least one routing node, that route configuration of the target microservice is completed.

2. The method according to claim 1, wherein the at least one routing node comprises a first routing node and a second routing node, and the route configuration policy indicates that a route configuration ranking of the first routing node is before that of the second routing node;
the sending the route configuration instruction to the at least one routing node based on the target routing information of the at least one routing node and the route configuration policy comprises:
sending a first configuration instruction to the first routing node, wherein the first configuration instruction carries target routing information of the first routing node; and
sending a second configuration instruction to the second routing node if real-time routing information of the first routing node is the same as the target routing information of the first routing node, wherein the second configuration instruction carries target routing information of the second routing node; and
the determining, if the real-time routing information of the at least one routing node is the same as the respective target routing information of the at least one routing node, that route configuration of the target microservice is completed comprises:
determining, if real-time routing information of the second routing node is the same as the target routing information of the second routing node, that route configuration of the target microservice is completed.

3. The method according to claim 2, wherein the target microservice comprises a newly added microservice, the first routing node is a routing node connected to the newly added microservice, the first routing node is connected to the second routing node, and the second routing node comprises a routing node between the first routing node and a root routing node that receives user traffic.

4. The method according to claim 2, wherein the target microservice comprises an original microservice, the route configuration information indicates the original microservice to switch from a third routing node to the first routing node, the third routing node is a routing node connected to the original microservice before switching, and the first routing node is a routing node connected to the original microservice after switching.

5. The method according to claim 4, wherein the at least one routing node further comprises the third routing node, and the second routing node is a routing node connected to the first routing node and the third routing node; and if the real-time routing information of the second routing node is the same as the target routing information of the second routing node, the method further comprises:
sending a first deletion instruction to the third routing node, wherein the first deletion instruction indicates the third routing node to delete routing information of the original microservice.

6. The method according to claim 4, wherein the at least one routing node further comprises the third routing node and a fourth routing node, the second routing node is a routing node connected to the first routing node, and the fourth routing node is a routing node connected to the third routing node; and if the real-time routing information of the second routing node is the same as the target routing information of the second routing node, the method further comprises:
sending a second deletion instruction to the fourth routing node, wherein the second deletion instruction indicates the fourth routing node to delete routing information of the original microservice.

7. The method according to claim 2, wherein the target microservice comprises an original microservice, the route configuration information indicates to delete routing information of the original microservice, the first routing node is a root routing node that receives user traffic, the first routing node is connected to the second routing node, and the second routing node comprises a routing node between the original microservice and the first routing node.

8. The method according to any one of claims 1 to 7, wherein the route configuration information further comprises one or more of a domain name, context information, and an identifier of the target microservice, wherein the domain name indicates a network region to which the target microservice belongs, and the context information indicates a cluster to which the target microservice belongs.

9. The method according to any one of claims 1 to 8, wherein the at least one routing node comprises one or more of a load balancer gateway, a proxy server, an Ingress gateway, and a Gateway gateway.

10. A route configuration apparatus, wherein the apparatus comprises:
an information obtaining module, configured to provide a route configuration interface, wherein the route configuration interface is used to obtain route configuration information of a target microservice, the route configuration information comprises a deployment address of the target microservice, and there is at least one routing node on an access path of the target microservice;
a route determining module, configured to determine target routing information of the at least one routing node based on the route configuration information, wherein the target routing information is routing information of the at least one routing node when the target microservice is accessible via the at least one routing node;
a route configuration module, configured to send a route configuration instruction to the at least one routing node based on the target routing information of the at least one routing node and a route configuration policy, wherein the route configuration policy indicates a route configuration sequence of the at least one routing node;
a route obtaining module, configured to obtain real-time routing information of the at least one routing node, wherein the real-time routing information is current routing information of the at least one routing node; and
a determining module, configured to determine, if the real-time routing information of the at least one routing node is the same as the respective target routing information of the at least one routing node, that route configuration of the target microservice is completed.

11. The apparatus according to claim 10, wherein the at least one routing node comprises a first routing node and a second routing node, and the route configuration policy indicates that a route configuration ranking of the first routing node is before that of the second routing node;
the route configuration module comprises:
a first configuration unit, configured to send a first configuration instruction to the first routing node, wherein the first configuration instruction carries target routing information of the first routing node; and
a second configuration unit, configured to send a second configuration instruction to the second routing node if real-time routing information of the first routing node is the same as the target routing information of the first routing node, wherein the second configuration instruction carries target routing information of the second routing node; and
the determining module is specifically configured to:
determine, if real-time routing information of the second routing node is the same as the target routing information of the second routing node, that route configuration of the target microservice is completed.

12. The apparatus according to claim 11, wherein the target microservice comprises a newly added microservice, the first routing node is a routing node connected to the newly added microservice, the first routing node is connected to the second routing node, and the second routing node comprises a routing node between the first routing node and a root routing node that receives user traffic.

13. The apparatus according to claim 11, wherein the target microservice comprises an original microservice, the route configuration information indicates the original microservice to switch from a third routing node to the first routing node, the third routing node is a routing node connected to the original microservice before switching, and the first routing node is a routing node connected to the original microservice after switching.

14. The apparatus according to claim 13, wherein the at least one routing node further comprises the third routing node, and the second routing node is a routing node connected to the first routing node and the third routing node; and if the real-time routing information of the second routing node is the same as the target routing information of the second routing node, the apparatus further comprises:
a route deletion module, configured to send a first deletion instruction to the third routing node, wherein the first deletion instruction indicates the third routing node to delete routing information of the original microservice.

15. The apparatus according to claim 13, wherein the at least one routing node further comprises the third routing node and a fourth routing node, the second routing node is a routing node connected to the first routing node, and the fourth routing node is a routing node connected to the third routing node; and if the real-time routing information of the second routing node is the same as the target routing information of the second routing node, the apparatus further comprises:
a route deletion module, configured to send a second deletion instruction to the fourth routing node, wherein the second deletion instruction indicates the fourth routing node to delete routing information of the original microservice.

16. The apparatus according to claim 11, wherein the target microservice comprises an original microservice, the route configuration information indicates to delete routing information of the original microservice, the first routing node is a root routing node that receives user traffic, the first routing node is connected to the second routing node, and the second routing node comprises a routing node between the original microservice and the first routing node.

17. The apparatus according to any one of claims 10 to 16, wherein the route configuration information further comprises one or more of a domain name, context information, and an identifier of the target microservice, wherein the domain name indicates a network region to which the target microservice belongs, and the context information indicates a cluster to which the target microservice belongs.

18. The apparatus according to any one of claims 10 to 17, wherein the at least one routing node comprises one or more of a load balancer gateway, a proxy server, an Ingress gateway, and a Gateway gateway.

19. A compute device cluster, wherein the compute device cluster comprises at least one compute device, and each compute device comprises a processor and a memory; and
the processor of the at least one compute device is configured to execute instructions stored in the memory of the at least one compute device, to cause the compute device cluster to perform the route configuration method according to any one of claims 1 to 9.

20. A computer-readable storage medium, comprising computer program instructions, wherein when the computer program instructions are executed by a compute device cluster, the compute device cluster performs the route configuration method according to any one of claims 1 to 9.

21. A computer program product comprising instructions, wherein when the instructions are run by a compute device cluster, the compute device cluster is caused to perform the route configuration method according to any one of claims 1 to 9.
